# EUROPÄISCHE PATENTANMELDUNG

(11) **EP 1 137 312 A1**
(43) Veröffentlichungstag der Anmeldung: **26.09.2001**
(21) Anmeldenummer: 00106121.7
(22) Anmeldetag: 21.03.2000
(51) Int. Cl.: H04Q 11/04

(54) **Verfahren zur Synchronisation eines mit Blocksicherung unsynchronisiert übertragenen Datenstroms**

(71) Anmelder: Tektronix, Inc., Beaverton, OR 97077-0001 (US)
(72) Erfinder: Die Erfindernennung liegt noch nicht vor
(74) Vertreter: Schurack, Eduard F.

(57) **Zusammenfassung**

Die Erfindung betrifft ein Verfahren zur Synchronisation eines mit Blocksicherung unsynchronisiert übertragenen Datenstroms, wobei der Datenstrom Zellen aufweist, die sich aus Zellenelementen mit einem vorgegebenen Datenumfang zusammensetzen, wobei eine Anzahl x von Zellenelementen einer Zelle nach einer vorgegebenen Blocksicherungsanweisung in einem Sicherungszellenelement verknüpft sind, welches Teil der Zelle ist und in einem vorgegebenen Abstand an Zellenelementen zu den x Zellenelementen angeordnet ist, folgende Schritte umfassend: a) Empfangen zumindest eines Teils des Datenstroms; b) Verarbeiten von x empfangenen Zellenelementen, die gemäß der Blocksicherungsanweisung relativ zueinander angeordnet sind, und eines Kandidatenzellenelements, das an der Position relativ zu den x Zellenelementen angeordnet ist, an der ein zugehöriges Sicherungszellenelement angeordnet wäre, zur Überprüfung, ob diese gemäß der Blocksicherungsanweisung zusammengehören, c) Annahme zumindest eines Vorsynchronisierungszustands bei positiver Feststellung einer Zusammengehörigkeit in Schritt b), wobei die Schritte b) und c) parallel auf eine Anzahl y von Sätzen aus zumindest jeweils x Zellenelementen angewendet werden. Sie betrifft weiterhin eine Vorrichtung zur Durchführung des Verfahrens.

## Beschreibung

Die vorliegende Erfindung betrifft ein Verfahren zur Synchronisation eines mit Blocksicherung unsynchronisiert übertragenen Datenstroms, wobei der Datenstrom Zellen aufweist, die sich aus Zellenelementen mit einem vorgegebenen Datenumfang zusammensetzen, wobei eine Anzahl x von Zellenelementen einer Zelle nach einer vorgegebenen Blocksicherungsanweisung in einem Sicherungszellenelement verknüpft sind, welches Teil der Zelle ist, und in einem vorgegebenen Abstand an Zellenelementen zu den x Zellenelementen angeordnet ist. Dabei wird zunächst zumindest ein Teil des Datenstroms empfangen. Anschließend werden x empfangene Zellenelemente, die gemäß der Blocksicherungsanweisung relativ zueinander angeordnet sind, sowie ein Kandidatenzellenelement, das an der Position relativ zu den x Zellenelementen angeordnet ist, an der ein zugehöriges Sicherungszellenelement angeordnet wäre, zur Überprüfung, ob diese gemäß der Blocksicherungsanweisung zusammengehören, verarbeitet. Ein Vorsynchronisierungs- oder ein Synchronisierungszustand wird bei positiver Feststellung einer Zusammengehörigkeit im zuvor erwähnten Schritt angenommen.

Die Erfindung betrifft weiterhin eine Vorrichtung zur Durchführung eines derartigen Verfahrens.

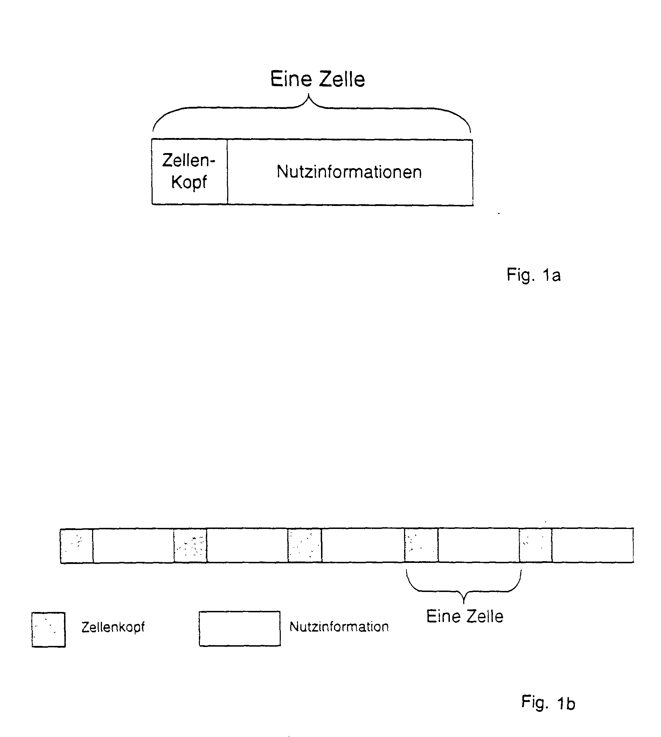

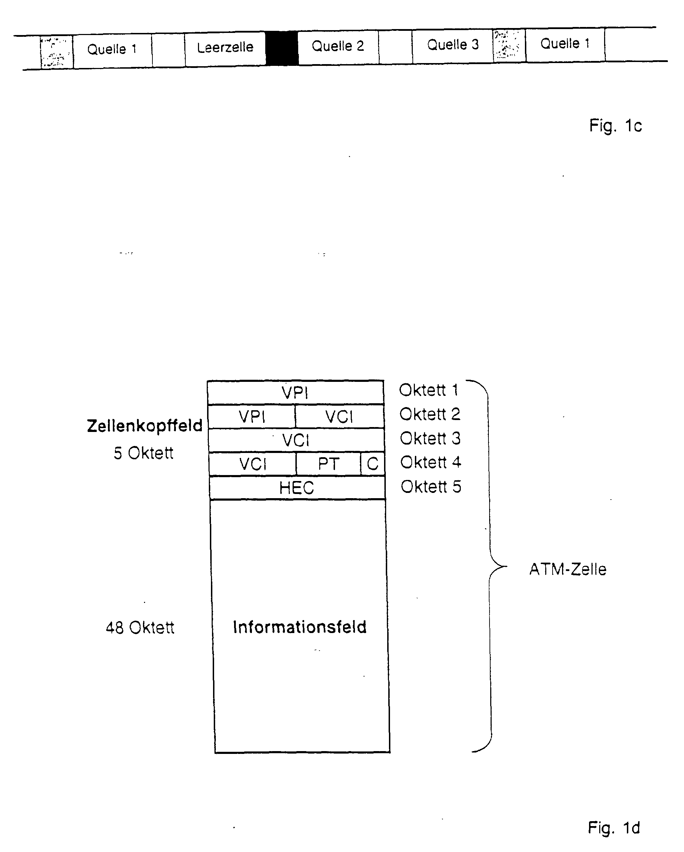

Die vorliegende Erfindung wird im nachfolgenden ohne Einschränkung ihrer Tragweite am Beispiel der ATM (Asynchronous Transfer Mode)-Übertragung dargestellt. Das ATM-Prinzip beruht auf einer vereinfachten, verbindungsbezogenen Paketvermittlung. Bei dieser digitalen Übermittlung werden Nutz- und Signalisierungsinformationen in Form von Paketen begrenzter Länge, den sogenannten Zellen, ausgetauscht. Die Zellen haben keine feste Position in einem Zeitraster wie bei einer synchronen Zeitmultiplex-Übertragung, sondern werden asynchron von den Quellen erzeugt. Einer Anwendung oder einem Dienst stehen daher keine fest zugeordneten Bandbreiten zur Verfügung, sondern die Quellen belegen eine gewisse Anzahl von Zellen innerhalb eines Zeitabschnitts. Die daraus resultierende Bandbreite muß beim Verbindungsaufbau von der Nachrichtenquelle angefordert werden, um eine Überlastung des Netzes zu vermeiden und die Abnahme der generierten Zellen durch den Empfänger zu garantieren. Der Ablauf der Zellenvermittlung erfolgt nach dem Speichervermittlungsverfahren ähnlich wie bei der Paketvermittlung. Eine Zelle enthält Nutzinformationen und einen Zellenkopf (Header), vgl. Fig. 1. Der Kopf dient unter anderem zur Identifizierung der Zellen, die zu demselben virtuellen Kanal gehören. Die Zellen werden (bei Bedarf) von den Nachrichtenquellen erzeugt, abhängig davon, ob die Quelle Informationen übertragen hat. Besteht bei der Quelle momentan kein Bedarf, Informationen zu senden, so werden "Leerzellen" übertragen. Dadurch entsteht ein kontinuierlicher Zellenstrom. Asynchron, d.h. unsynchronisiert, heißt dieses Verfahren, weil die Bit-Rate, die von den Quellen benötigt wird, unabhängig von der insgesamt zur Verfügung stehenden Bit-Rate ist. Die Bit-Übertragung selbst kann deshalb trotzdem synchron erfolgen.

Bei dem von der ITU-T (International Telecommunication Union-Telecommunication Standardization Sector) vorgeschlagenen ATM-Verfahren werden Zellen mit konstanter Länge verwendet, siehe Fig. 1b. Bei diesem Verfahren sind keine zusätzlichen Flags zur Abgrenzung verschiedener Zellen untereinander erforderlich.

Die Zellen von unterschiedlichen Verbindungen können im Multiplexbetrieb, d.h. zeitlich verschachtelt übertragen werden. Nachrichtenquellen höherer Bit-Rate belegen dabei mehrere Zellen, entsprechend ihrem Bedarf. Nachrichtenquellen mit geringerer Bit-Rate benötigen in einem entsprechenden Zeitabschnitt weniger Zellen, vgl. Fig. 1c. Nicht benötigte Zellen werden als "Leerzellen" gekennzeichnet. Dadurch können den Quellen und Senken sehr unterschiedliche Übertragungsraten zur Verfügung gestellt werden. Die erforderliche Übertragungsrate kann im Verlauf einer Verbindung unterschiedliche Anforderungen haben. ATM entspricht sehr gut diesem dynamischen Kommunikationsverhalten.

In den ITU-T-Empfehlungen ist weiterhin der Aufbau einer ATM-Zelle festgelegt, vgl. Fig. la sowie Fig. ld. ATM-Zellen sind einheitliche Informationseinheiten, die von einem ATM-Übermittlungssystem übertragen und vermittelt werden. Wie erwähnt dient der Zellenkopf zur Steuerung der Zellen, das Informationsfeld zur Übertragung der Nutzinformation. Das Informationsfeld hat eine feste, konstante Länge von 48 Oktett. In ihm werden alle Nutzinformationen oder Signalisierungsnachrichten übertragen. Das Kopffeld, welches wie erwähnt zur Leitung der Zellen durch das ATM-Netz dient, hat eine festgeschriebene Länge von 5 Oktett. Das Kopffeld dient unter anderem zur Identifizierung des virtuellen Kanals (16 Bit), zur Identifizierung des Kanalbündels (8 Bit am Teilnehmeranschluß und 12 Bit zwischen ATM-Vermittlungsstellen), zur Kennzeichnung der Informationsfeldart (3 Bit) sowie zur Fehlererkennung und Fehlerbehebung im Kopffeld (8 Bit). Im Zusammenhang mit der letzten Funktion ermöglicht eine Prüfsequenz im Kopffeld, der sogenannte HEC (Header Error Control), die Erkennung und Behebung von Fehlern.

Fig. 1d zeigt in detaillierterer Darstellung die im Zellenkopffeld übertragenen Daten:
Zugriffssteuer/Sendeberechtigung GFC (Generic Flow Control), Kanalidentifizierung VCI (Virtual Channel Identifier), Pfad- oder Kanalbündelidentifizierung VPI (Virtual Path Identifier), eine Unterscheidung zwischen Nutzinformation und Netzinformation PT (Payload Type) sowie eine Angabe zur Zellenpriorität C (Cell Loss Priority).

Das fünfte Oktett des Zellenkopffelds wird in der Datenquelle aus den ersten vier Oktetten einer ATM-Zelle berechnet. Hierbei findet ein sogenanntes CRC-Verfahren (Cyclic Redundancy Check), welches in der ITU T Rec. I. 432 eindeutig mit dem Generatorpolynom G(x) beschrieben ist, Anwendung.

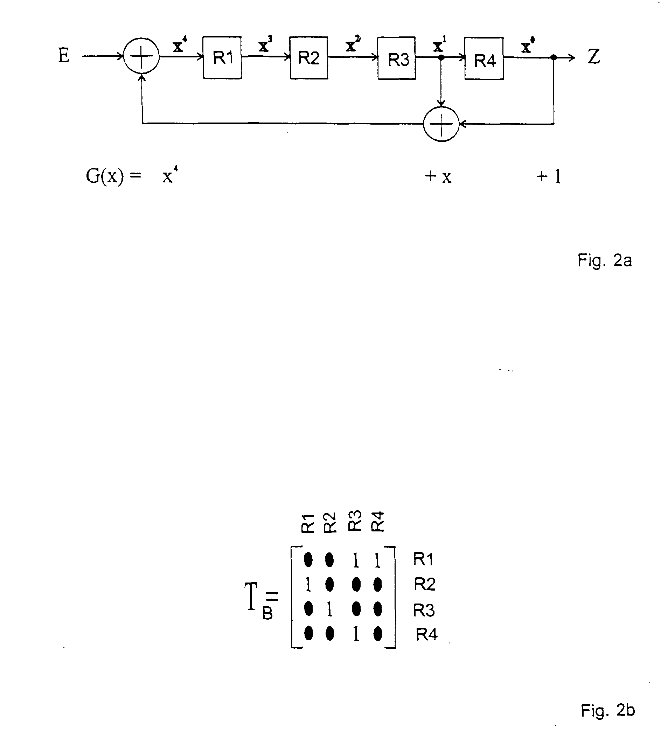

Fig. 2a zeigt beispielhaft für ein Generatorpolynom G(x) = x⁴ + x + 1 die zugehörige serielle Schaltung. In Fig. 2b ist die zugehörige Transformationsmatrix T^{B} dargestellt. Die serielle Schaltung umfaßt vier Register R1, R2, R3, R4, über die eine am Eingang eingespeiste Signalfolge E in ein Ausgangssignal Z transformiert wird. Register 1 (erste Zeile der Matrix) wird durch Register 3 (dritte Spalte der Matrix) und Register 4 (vierte Spalte der Matrix) beeinflußt. Dies bedeutet in der ersten Zeile der Matrix stehen an dritter und vierter Position jeweils eine "1". Register 2 (zweite Zeile) wird durch Register 1 (erste Spalte) beeinflußt, d.h. in der zweiten Zeile befindet sich die "1" an erster Position. Register 3 (dritte Zeile) wird durch Register 2 (zweite Spalte) bestimmt, d.h. in der dritten Zeile steht nur an zweiter Position eine "1". Register 4 (vierte Zeile) wird von Register 3 (dritte Spalte) beeinflußt, d.h. in der vierten Zeile befindet sich nur an der dritten Position eine "1" . Die Transformationsmatrix T_{B} wird auf die ersten vier Oktett des Zellenkopfes zur Erzeugung eines fünften Oktetts angewendet. Nach logischer Verknüpfung der Folge 01010101 wird das fünfte Oktett als HEC einer ATM-Zelle hinzugefügt.

Dieser HEC läßt sich nicht nur zur Prüfung und Behebung von Fehlern im Zellenkopf verwenden, sondern kann auch als Synchronisationshilfe auf Zellenebene dienen.

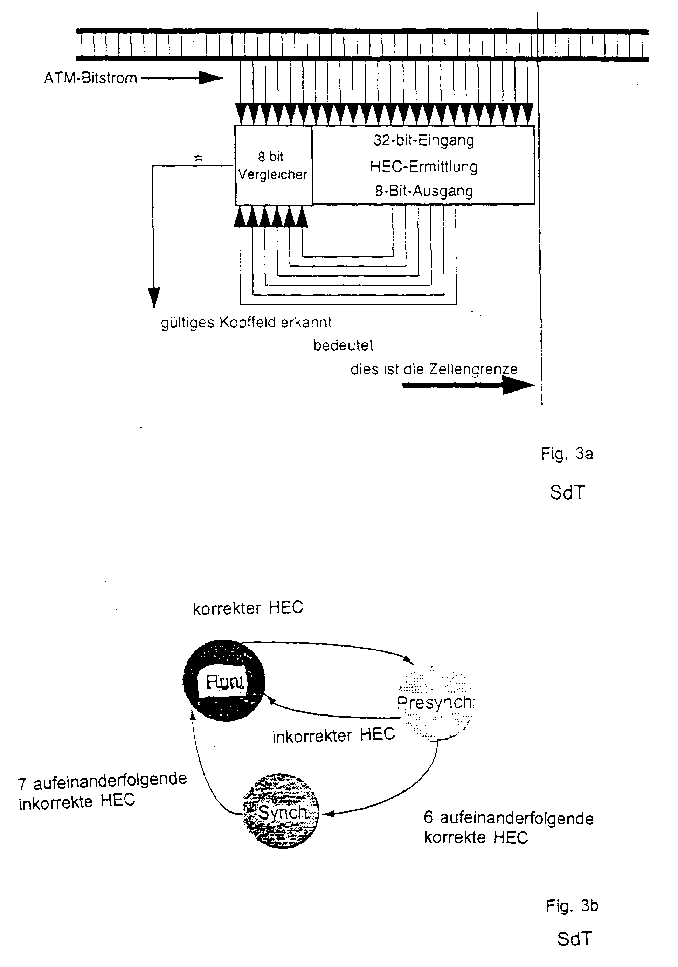

Fig. 3a zeigt als Beispiel für die Zellensynchronisation das zugehörige sogenannte "Header Error Control"-Verfahren. Bei diesem Verfahren wird der ATM-Bit-Strom im asynchronen Zustand ständig mitgelesen und nach einem gültigen Kopffeld durchsucht. Ein gültiges Kopffeld wurde gefunden, wenn sich die Berechnung der Prüfsequenz mit der übertragenen Prüfsequenz deckt. Wurde ein gültiges Kopffeld gefunden, rastet der Mechanismus ein und erwartet nach 53 Oktett wieder ein gültiges Kopffeld.

Anschließend wird auf die in der ITU T Rec. I. 432 beschriebene Art und Weise der Synchronzustand gemäß einer dort beschriebenen State Machine erreicht, siehe Fig. 3b. Zu Beginn befindet sich die State Machine im Hunt-Modus, in der die oben bezeichnete bitweise Überprüfung durchgeführt wird. Sobald ein korrekter HEC gefunden wurde, wechselt die State Machine in einen Presynch-Modus, in dem von einem bitweisen Check auf einen zellenweisen Check gewechselt wird. Stellt die State Machine in diesem Modus einen inkorrekten HEC fest, wechselt sie wieder zurück in den Hunt-Modus. Sofern jedoch im Presynch Modus bei einer festgelegten Anzahl aufeinanderfolgenden Zellen, beispielsweise sechs, ein korrekter HEC ermittelt wird, geht die State Machine in den Synch Modus, in dem weiterhin eine zellenweise Überprüfung des HECs vorgenommen wird. Sobald die sich im Synch Modus befindliche State Machine bei einer weiteren festgelegten Anzahl aufeinanderfolgenden Zellen, beispielsweise sieben, einen inkorrekten HEC ermittelt, geht sie wieder zurück in den Hunt Modus.

Hintergrundinformationen zur ATM-Zellenübertragung können in detaillierter Form entnommen werden beispielsweise Gerd Siegmund, "Technik der Netze", ISBN 3-7685-2495-7.

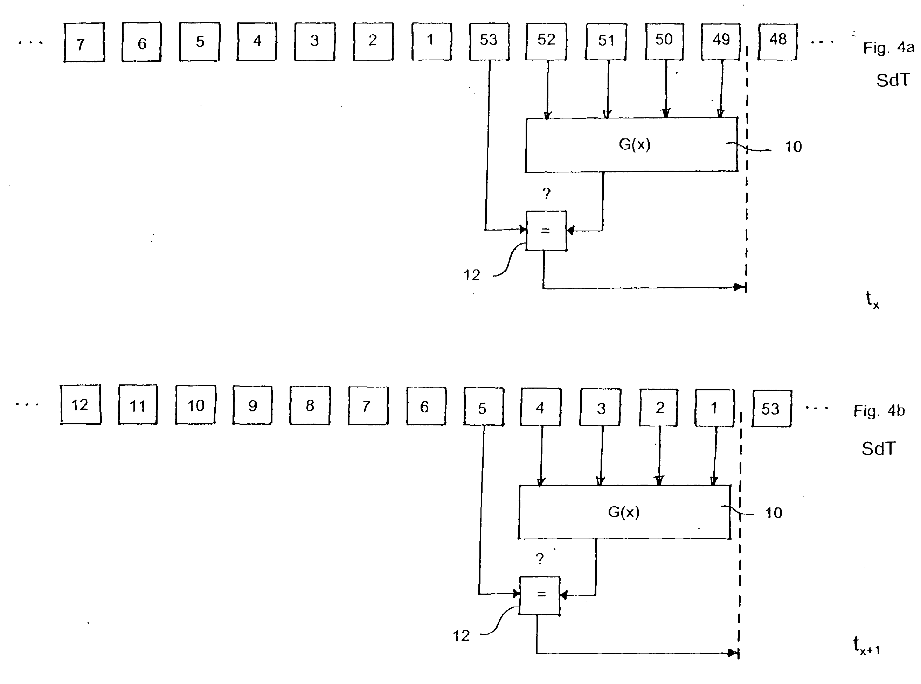

ATM-Zellen werden im Netz durch weitere Rahmeninformationen verpackt z.B. in der Synchronen Digitalen Hierarchie. Bei Übertragung innerhalb eines solchen Rahmens wird vom System sichergestellt, daß die einzelnen Bits immer zu kompletten Oktetts zusammengefaßt werden können. Dieser Aufbau kann der ITU-T Rec. G. 708 entnommen werden. Daraus ergibt sich die Möglichkeit, zur Zellensynchronisation nicht mehr eine bitweise Überprüfung durchzuführen, vgl. Fig. 3a, sondern auf eine byteweise Überprüfung zu wechseln. Die Figuren 4a und 4b zeigen ein aus dem Stand der Technik bekanntes Verfahren zur Zellensynchronisation mit byteweiser Überprüfung zum Zeitpunkt tₓ (Fig. 4a) bzw. zum Zeitpunkt tₓ₊₁ (Fig. 4b) .

Zunächst werden in Fig. 4a zum Zeitpunkt tₓ aus einem eingehenden Zellenstrom beliebige vier aufeinanderfolgende Oktett, hier die Oktette 49 bis 52 zur Berechnung eines fiktiven HECs im Block 10 verwendet. Dieser fiktive HEC wird mit dem auf die vier beliebig herausgegriffenen Oktett folgenden Oktett, hier das Oktett 53, als "Kandidaten für einen HEC" im Block 12 verglichen. Bei Übereinstimmung wird davon ausgegangen, daß das Oktett mit der Nummer 49 den Zellenanfang bildet. Wird keine Übereinstimmung festgestellt, so werden zum Zeitpunkt tₓ₊₁ die nächsten fünf Byte einer byteweisen HEC-Überprüfung unterzogen.

Gemäß Fig. 4b werden nun die Oktette 1 bis 4 im Block 10 einer HEC-Berechnung unterzogen und, wie bereits im Zusammenhang mit Fig. 4a ausgeführt im Block 12 mit dem fünften Oktett verglichen. Für ATM-Zellen ergäbe sich bei dem Vergleich gemäß Fig. 4b eine Übereinstimmung - der HEC ist tatsächlich im 5. Oktett lokalisiert, so daß Oktett 1 als Zellenanfang erkannt würde. Die im Zusammenhang mit Fig. 3b beschriebene State Machine würde daraufhin in den Presynch-Modus wechseln.

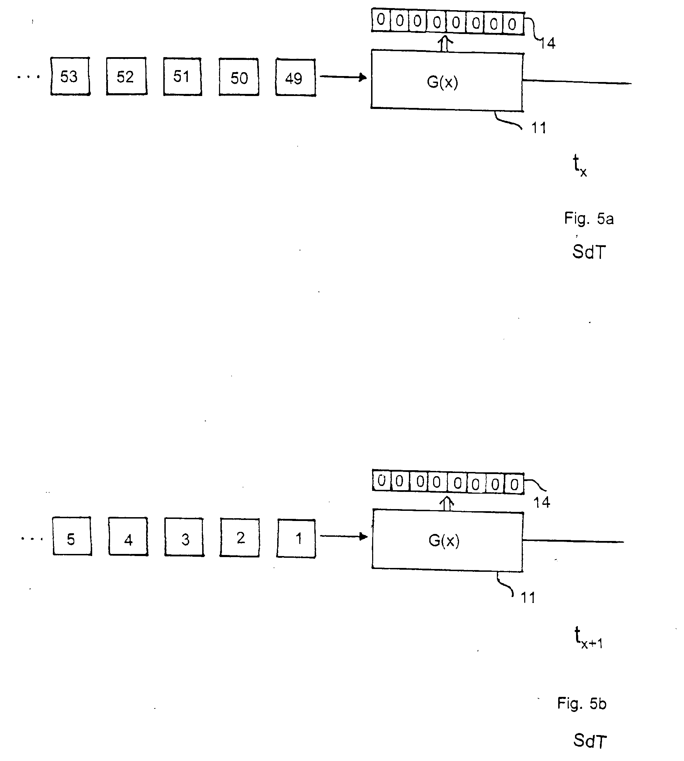

Die Figuren 5a und 5b zeigen eine Variante zur Ermittlung des Zellenanfangs. Hierzu wird ein Schieberegister 14, in dem eine Abfolge von Nullen eingetragen ist, verwendet und das Generatorpolynom G(x) im Block 11, der an das Schieberegister 14 gekoppelt ist, auf fünf aufeinanderfolgende Oktette angewendet. Sofern nach Verarbeitung des fünften Oktett das Schieberegister wiederum mit einer Abfolge von Nullen gefüllt ist, wurde der Zellenanfang gefunden uns zwar als das erste Oktett der fünf Oktette.

Fig. 5a zeigt diese Variante zum Zeitpunkt tₓ, wobei die Oktette 49 bis 53 im Block 11 und Schieberegister 14 verarbeitet werden, während in Fig. 5b der Zeitpunkt tₓ₊₁ dargestellt ist, bei dem die nächsten fünf Oktett, d.h. die Oktette 1 bis 5, verarbeitet werden und dies zur Feststellung des Zellenanfangs und somit zur Zellensynchronisation führen würde.

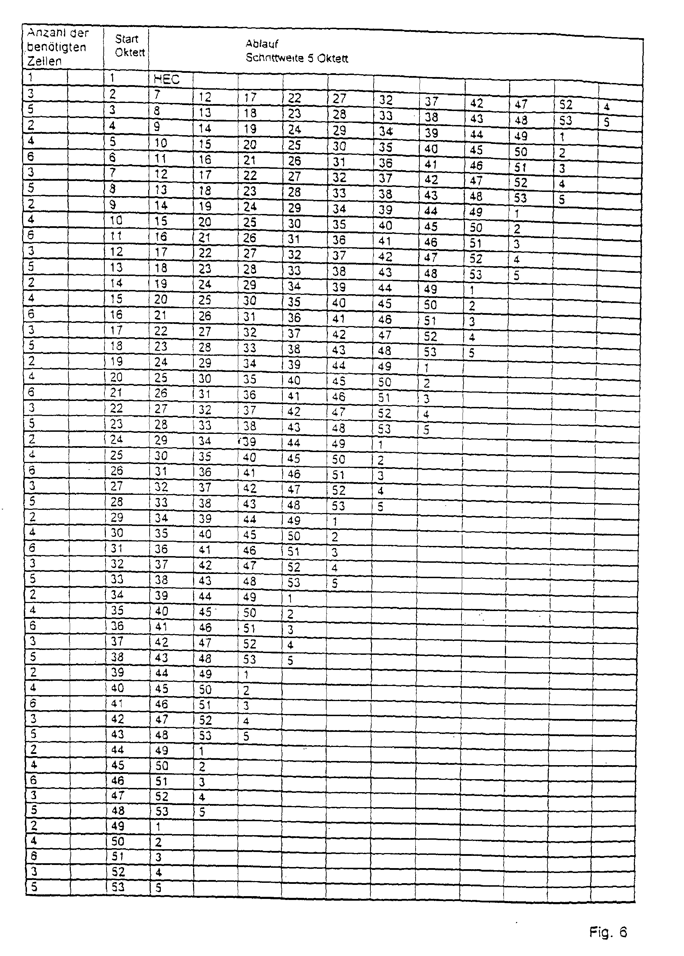

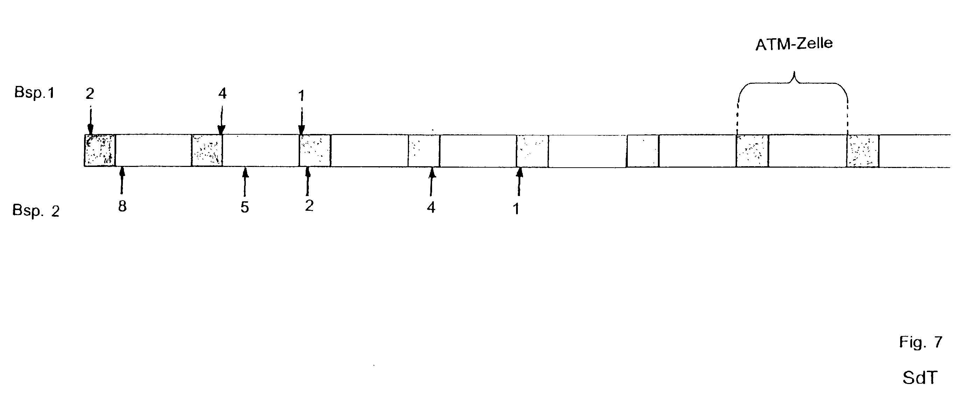

Fig. 6 zeigt eine Aufstellung der in Abhängigkeit des Startbytes innerhalb einer Zelle entnommen werden kann nach wievielen Zellen zum ersten Mal ein Zellenanfang gefunden wird. In der Spalte Startoktett ist dasjenige Oktett angegeben, bei dem innerhalb der ersten untersuchten Zelle gestartet wird. Ist das Startoktett das Oktett 1, wird unmittelbar der HEC gefunden. Bei einem Startoktett 2, siehe hierzu Beispiel 1 von Fig. 7, werden zunächst das dritte, vierte, fünfte, sechste Oktett dem Generatorpolynom G(x) unterzogen und das Ergebnis mit Oktett 2 verglichen. Hierbei wird keine Zellensynchronisation festgestellt. Im nächsten Schritt werden die Oktette 8, 9, 10, 11 mit Oktett 7 verglichen, im nächsten die Oktette 13, 14, 15, 16 mit Oktett 12. Dies setzt sich fort bis in der zweiten Zelle, siehe letzte Spalte von Zeile 2 der Aufstellung (diejenige, in der das Startoktett die Nummer 2 trägt) schließlich die Oktette 5, 6, 7, 8 mit Oktett 4 verglichen werden. Demnach ist für die zweite Zelle das Startoktett das Oktett 4, weshalb in der Aufstellung in die entsprechende Zeile zu wechseln ist. Ausgehend vom Startoktett 4 werden im nächsten Schritt die Oktette 10, 11, 12, 13 mit Oktett 9, im darauffolgenden die Oktette 15, 16, 17, 18 mit Oktett 14 verglichen, usw.. Schließlich werden in der darauffolgenden Zelle, siehe vorletzte Spalte der Zeile mit Startoktett 4, die Oktette 2, 3, 4, 5 mit Oktett 1 verglichen und somit der Zellenanfang gefunden. Spalte 1 der Aufstellung von Fig. 6 kann entnommen werden, daß ausgehend von einem Startoktett 2 drei Zellen benötigt werden, um eine Zellensynchronisation zu erzielen.

Gemäß dem zweiten Beispiel von Fig. 7 wird ausgehend vom Oktett 8 als Startoktett der ersten untersuchten Zelle zu Oktett 5 als Startoktett einer zweiten Zelle, zu Oktett 2 als Startoktett einer dritten Zelle, zu Oktett 4 als Startoktett einer vierten Zelle und schließlich zu Oktett 1 einer fünften Zelle gewechselt. Mit der fünften Zelle wird Synchronisation erzielt, siehe hierzu auch den entsprechenden Eintrag in der ersten Spalte der Zeile mit Startoktett 8.

Ausgehend von diesem Stand der Technik besteht die Aufgabe, zur Beurteilung des Synchronisierverhaltens eines Testobjekts die Synchronität auf Zellenbasis an einem Meßgerät früher zu erreichen als das zu untersuchende Testobjekt.

Diese Aufgabe wird erfindungsgemäß gelöst durch ein Verfahren mit den Merkmalen von Anspruch 1 sowie eine Vorrichtung zur Durchführung des Verfahrens mit den Merkmalen von Anspruch 9.

Der Erfindung liegt die Idee zugrunde, daß sich durch mehrfache parallele oktettversetzte Durchführung der Synchronitätsprüfung die Anzahl der Zellen, die nötig sind, um Synchronisation herzustellen reduzieren läßt. Im Optimalfall wird die Anzahl der parallel arbeitenden Synchronitätsprüfungen so gewählt, daß zumindest beim n-ten, insbesondere bereits beim ersten Parallelanwendungsschritt mit Sicherheit eine Synchronisierung positiv festgestellt wird. Wenn nunmehr beim Meßgerät anstelle eines Vorsynchronisierungszustands (Presynch) sofort ein Synchronisierungszustand (Synch), vgl. Fig.3b, angenommen wird, können die sechs Zellen, die normalerweise nötig wären, um vom Presynch-Zustand in den Synch-Zustand zu kommen, bereits zu Meßzwecken verwendet werden. Sollte sich hinterher herausstellen, daß kein Synchronisierungszustand am Meßgerät erzielt wurde, kann diese Messung verworfen werden. Andernfalls wird das Ergebnis ausgewertet.

Mit Bezug auf die beschriebene ATM-Übertragung läßt sich somit durch fünffache parallele Durchführung der Synchronisierungsprüfung eine Synchronisierung bereits beim ersten Parallelanwendungsschritt erzielen.

Für die erfindungsgemäße Lösung können beide im Zusammenhang mit den Fig. 4 und Fig. 5 beschriebene Varianten zur Anwendung kommen. So kann vorgesehen sein, daß Schritt b) folgende Teilschritte umfaßt: bl) Anwenden der vorgegebenen Blocksicherungsanweisung auf x empfangene Zellenelemente, die gemäß der Blocksicherungsanweisung relativ zueinander angeordnet sind, zum Erhalten eines Testsicherungszellenelements; und b2) Vergleichen des Testsicherungselements mit dem Kandidatenzellenelement, wobei eine positive Zusammengehörigkeit gemäß Schritt c) festgestellt wird bei Übereinstimmung zwischen Testsicherungszellenelement und Kandidatenzellenelement.

Gemäß der Alternative umfaßt Schritt b) folgende Teilschritte: bl) Belegung eines Schieberegisters mit fester Bitfolge, insbesondere einer Abfolge von Nullen, wobei das Schieberegister soviele Speicherplätze hat wie ein Sicherungszellenelement Bits, b2) Anwenden der Blocksicherungsanweisung unter Verwendung des Schieberegisters, wobei insbesondere eine serielle Datenabfolge umfassend die x empfangenen Zellenelemente und das Kandidatenzellenelement vor Eingabe in das Schieberegister mit einer, gegebenenfalls bearbeiteten, Ausgangsbitfolge des Schieberegisters verknüpft wird, und b3) Auslesen der Speicherplätze des Schieberegisters nach Schritt b), wobei eine positive Zusammengehörigkeit gemäß Schritt c) festgestellt wird, wenn die aus dem Schieberegister ausgelesene Bitfolge einer bestimmten Bitfolge, insbesondere einer Abfolge von Nullen entspricht.

Die Blocksicherungsanweisung kann ein Generatorpolynom mit oder ohne zusätzliche logische Verknüpfung enthalten. Wie bereits erwähnt, kann es sich bei den Zellen um ATM-Zellen handeln.

Besonders vorteilhaft ist es, wenn das erfindungsgemäße Verfahren bzw. die erfindungsgemäße Vorrichtung derart ausgelegt ist, daß die Schritte a) bis c) in Echtzeit durchführbar sind.

Mit Bezug auf die ATM-Übertragung kann jedes Zellenelement ein Oktett lang sein und innerhalb der Anzahl y von Sätzen aus zumindest jeweils x Zellenelementen können die einzelnen Sätze um ein Oktett versetzt zueinander angeordnet sein.

Eine Vorrichtung zur Durchführung des erfindungsgemäßen Verfahrens weist für die parallele Ausführung zumindest der Schritte b) und c) auf eine Anzahl y von Sätzen von jeweils zumindest x Zellenelementen y parallele Schaltkreise auf.

Nach positiver Feststellung einer Zusammengehörigkeit durch einen der Schaltkreise, d.h. insbesondere eines Vorsynchronisierungs- oder Synchronisierungszustands, wird bevorzugt allein der Schaltkreis bis zur Feststellung eines synchronisierten oder eines unsynchronisierten Zustands weiterbetrieben, der die Zusammengehörigkeit festgestellt hat.

Um den Aufwand zu reduzieren, kann die Vorrichtung derart ausgelegt werden, daß im nächsten Anwendungsschritt an den die Zusammengehörigkeit feststellenden Schaltkreis zumindest die Daten der Zellenelemente einer im Datenstrom nachfolgenden Zelle koppelbar sind, die den Positionen innerhalb einer Zelle entsprechen, die an ihn in dem die Zusammengehörigkeit feststellenden Schritt gekoppelt wurden.

Weitere vorteilhafte Weiterbildungen der Erfindung sind in den Unteransprüchen definiert.

Im folgenden werden Ausführungsbeispiele der Erfindung unter Hinweis auf die beigefügten Zeichnungen näher beschrieben. Es stellen dar:
- Fig. 1a: die Struktur einer ATM-Zelle;
- Fig. 1b: eine Darstellung der Bildung eines Zellenstroms bei ATM-Übertragung;
- Fig. 1c: den Zellenmultiplex bei einer ATM-Übertragung;
- Fig. 1d: den Aufbau einer ATM-Zelle;
- Fig. 2a: in schematischer Darstellung eine serielle Schaltung zur Realisierung eines Generatorpolynoms G(x);
- Fig. 2b: die zu der Schaltung von Fig. 2a zugehörige Transformationsmatrix T_{B};
- Fig. 3a: ein aus dem Stand der Technik bekanntes Verfahren zur Zellensynchronisation;
- Fig. 3b: eine Zustandsmaschine wie sie zur Zellensynchronisation im Stand der Technik Anwendung findet;
- Fig. 4: ein aus dem Stand der Technik bekanntes Verfahren zur Zellensynchronisation mit byteweiser Überprüfung gemäß einer ersten Variante zum Zeitpunkt tₓ (Fig. 4a) bzw. zum Zeitpunkt tₓ₊₁ (Fig. 4b) ;
- Fig. 5: ein aus dem Stand der Technik bekanntes Verfahren zur Zellensynchronisation mit byteweiser Überprüfung gemäß einer zweiten Variante zum Zeitpunkt tₓ (Fig. 5a) bzw. zum Zeitpunkt tₓ₊₁ (Fig. 5b);
- Fig. 6: eine Aufstellung, der zu entnehmen ist, nach wievielen Zellen bei dem aus dem Stand der Technik bekannten Verfahren Zellensynchronisation erzielt wird;
- Fig. 7: zwei Beispiele zur Zellensynchronisation nach dem aus dem Stand der Technik bekannten Verfahren;
- Fig. 8: eine erste Ausführungsform eines erfindungsgemäßen Verfahrens zur Zellensynchronisation mit byteweiser Überprüfung zum Zeitpunkt tₓ (Fig. 8a) bzw. zum Zeitpunkt tₓ₊₁ (Fig. 8b);
- Fig. 9: eine zweite Ausführungsform eines erfindungsgemäßen Verfahrens zur Zellensynchronisation mit byteweiser Überprüfung zum Zeitpunkt tₓ (Fig. 9a) bzw. zum Zeitpunkt tₓ₊₁ (Fig. 9b); und
- Fig. 10: eine Prinzipschaltung einer Ausführungform einer erfindungsgemäßen Vorrichtung.

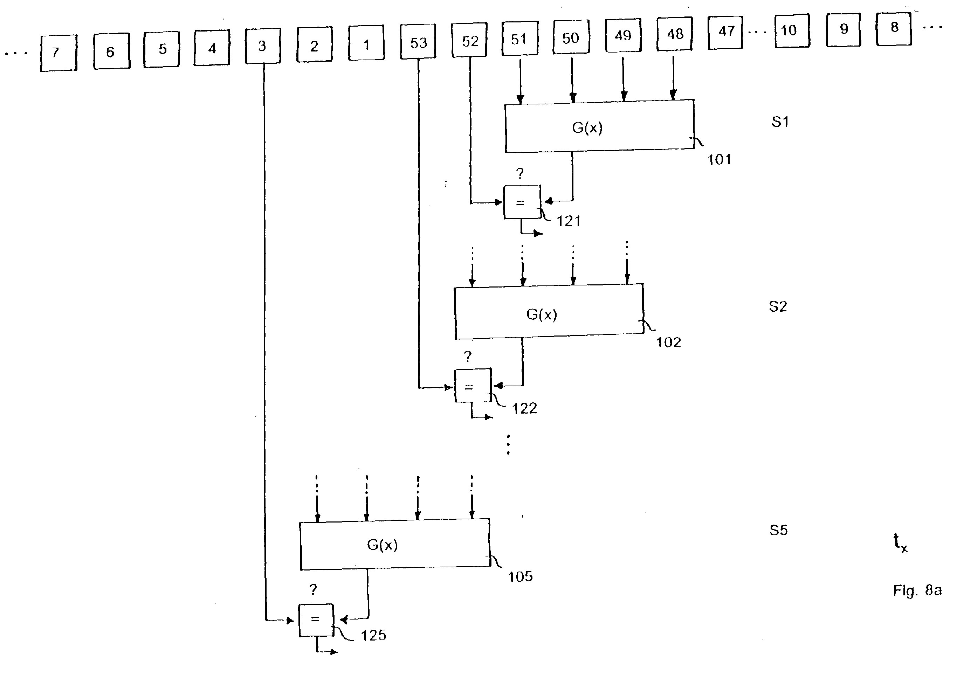

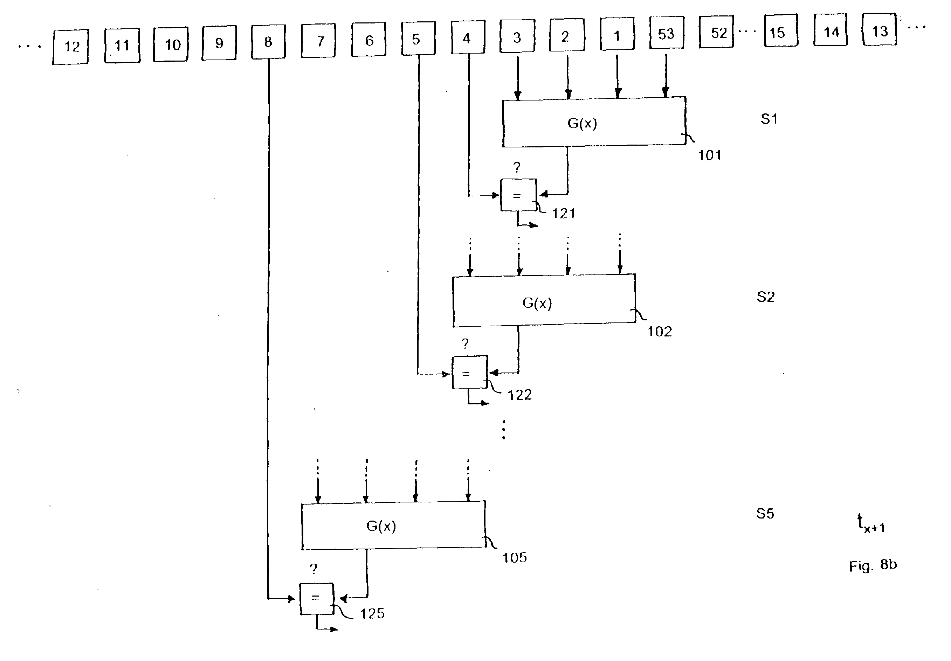

Bei einer ersten Variante einer erfindungsgemäßen Vorrichtung werden gemäß Fig. 8a zum Zeitpunkt tₓ fünf Schaltkreisen S1 bis S5 jeweils um ein Oktett versetzt fünf Oktette zugeführt, wobei auf jeweils vier Oktette ein Generatorpolynom angewendet wird und das Ergebnis mit dem fünften Oktett auf Übereinstimmung überprüft wird. Wie bereits im Zusammenhang mit Fig. 4a ausgeführt, wird bei Übereinstimmung Vorsynchronisation oder Synchronisation (vgl. Fig. 3d) angenommen. Die Schaltkreise 101 und 121 bzw. 102 und 122 bzw. 105 und 125 entsprechen in ihrer Funktion den Schaltkreisen 10 und 12 von Fig. 4a. Fig. 8b zeigt die Anordnung von Fig. 8a zum Zeitpunkt tₓ₊₁, in dem entsprechend der Anzahl n von Schaltkreisen (hier n = 5) jedem Schaltkreis S1 bis S5 fünf weitere Oktette - um n Oktett versetzt gegenüber dem Zeitpunkt tₓ - zugeführt werden. Bei der Darstellung von Fig. 8b wird der Schaltkreis S2, wenn es sich bei dem übertragenen Datenstrom um einen ATM-Zellenstrom handelt, Übereinstimmung feststellen und damit einen Vorsynchronisierungs- oder Synchronisierungszustand anzeigen.

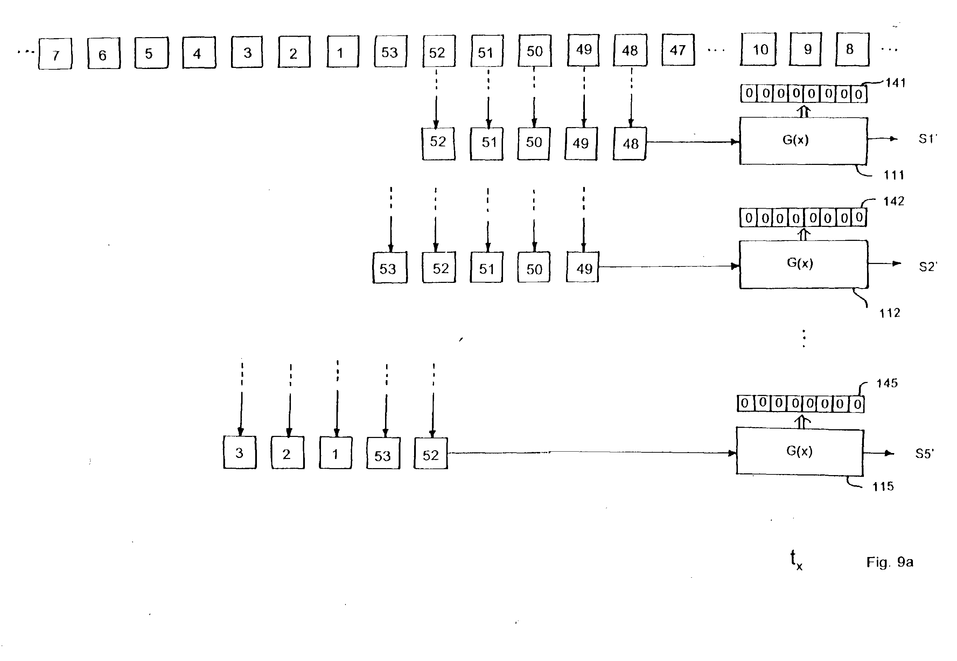

In Fig. 9a werden ebenfalls fünf Schaltkreise S1' bis S5', die jeweils einen Block 111 bis 115 zur Anwendung des Generatorpolynoms G(x) als auch ein mit einer Abfolge von Nullen vorbelegtes Schieberegister 141 bis 145 aufweisen, zum Zeitpunkt tₓ mit jeweils um ein Oktett versetzten fünf Oktett einer Datenfolge beaufschlagt.

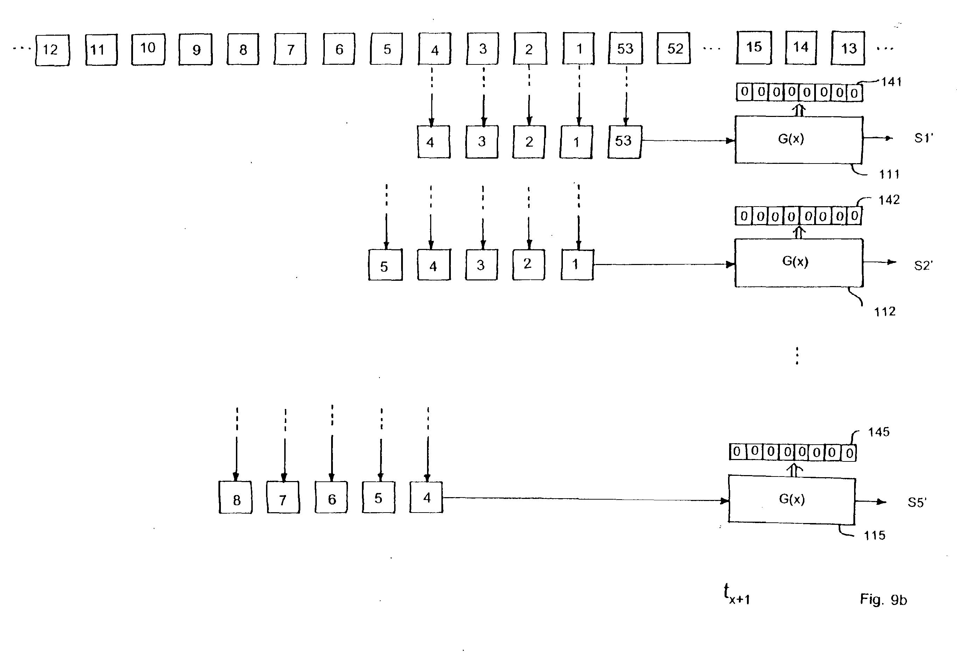

Fig. 9b zeigt die Anordnung von Fig. 9a zum Zeitpunkt tₓ₊₁, bei dem gegenüber dem Zeitpunkt tₓ ein Oktettversatz von fünf (entsprechend der Anzahl der Schaltkreise) vorgenommen wurde. Zum Zeitpunkt tₓ₊₁ wird der Schaltkreis S2' unter der Annahme, daß es sich bei der übertragenen Datenfolge um einen ATM-Datenstrom handelt, nach Beaufschlagung mit den fünf Oktetten 1, 2, 3, 4, 5 wiederum eine Abfolge von lauter Nullen im Schieberegister 142 eingeschrieben haben, was ein Indiz für einen Vorsynchronisierungs- oder Synchronisierungszustand ist.

Anstelle der in den Figuren 8 und 9 beschriebenen Varianten, bei denen den einzelnen Schaltkreisen jeweils die gleiche Anzahl von Oktetten um ein Oktett versetzt zugeführt wird, sind andere Varianten mit anderem Versatz denkbar. Welcher Versatz besonders vorteilhaft ist, hängt vom jeweiligen Übertragungsverfahren ab und kann daher variieren.

Durch die Wahl von fünf parallelen Schaltkreisen kann bei den in Fig. 8 und Fig. 9 dargestellten Ausführungsformen der Erfindung bereits im ersten Parallelverarbeitungsschritt ein Zellenanfang gefunden werden. Bei weniger parallelen Schaltkreisen ergibt sich zwar im Mittel eine Verbesserung gegenüber dem Stand der Technik, nicht jedoch die in den Fig. 8 und 9 dargestellte besonders bevorzugte Lösung.

Nach dem ersten Erkennen eines Zellenanfangs können die übrigen Schaltkreise in der Analyse deaktiviert werden und nur der erfolgreiche Schaltkreis weiter betrieben werden. Wenn beispielsweise nach Erkennen eines Zellenanfangs ein Vorsynchronisierungszustand (Presynch) angenommen wird, kann vorgesehen werden, daß nur der entsprechende erfolgreiche Schaltkreis vom Such-Mode (Hunt) in den Vorsynchronisierungsmodus Presynch bzw. den Synchronisierungsmodus Synch wechselt.

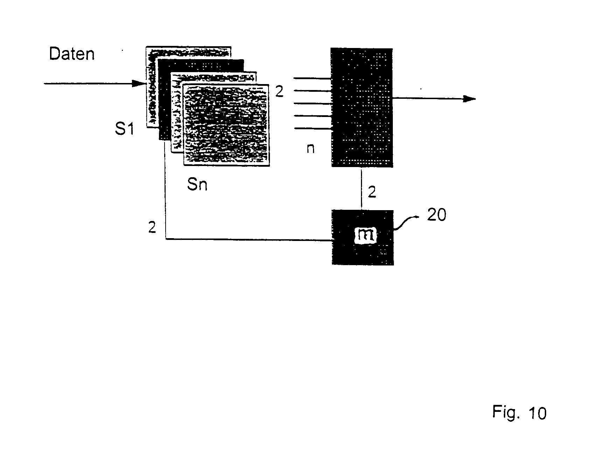

Fig. 10 zeigt in schematischer Darstellung ein Blockschaltbild einer besonders bevorzugten Ausführungsform einer erfindungsgemäßen Vorrichtung. Im Suchmodus werden n Schaltkreisen um eine bestimmte Anzahl Oktett versetzt Daten zugeführt. Bei Erkennung eines Presynch- oder Synch-Zustandes wird nurmehr der den Synchronisierungszustand erkennende Schaltkreis weiter betrieben. Um den Steuerungsaufwand bei der Synchronisierschaltung gering zu halten wird hier im Block 20 ein Sprung um m Oktett durchgeführt. m wird hierbei so gewählt, daß die Anzahl Oktett der Nutzinformation minus m Oktett eine Zahl ergibt, die durch z teilbar ist, wobei z der Anzahl Oktette entspricht, die jedem Schaltkreis zugeführt werden. Bei ATM-Übertragung beträgt die Nutzinformation beispielsweise 48 Oktett, z beträgt fünf Oktett, so daß m zu drei gewählt wird. Damit kann nach einem Sprung von drei die Synchronisierschaltung, die auf Fünfersprünge angelegt ist, besonders vorteilhaft weiterverwendet werden, so daß bei der nächsten Untersuchung ohne großen Aufwand, d.h. mit geringstem zusätzlichem Schaltungsaufwand zu einem Zellenanfang gesprungen wird.

Besonders vorteilhaft kann vorgesehen werden, daß im nächsten Schritt, an den die Vorsynchronisation oder Synchronisation feststellenden Schaltkreis unmittelbar die Daten der Zellenelemente einer im Datenstrom nachfolgenden Zelle koppelbar sind, die den Positionen innerhalb einer Zelle entsprechen, die an ihn in dem die Vorsynchronisation oder Synchronisation feststellenden Schritt gekoppelt wurden.

## Patentansprüche

1. Verfahren zur Synchronisation eines mit Blocksicherung unsynchronisiert übertragenen Datenstroms,
wobei der Datenstrom Zellen aufweist, die sich aus Zellenelementen mit einem vorgegebenen Datenumfang zusammensetzen, wobei eine Anzahl x von Zellenelementen einer Zelle nach einer vorgegebenen Blocksicherungsanweisung in einem Sicherungszellenelement verknüpft sind, welches Teil der Zelle ist und in einem vorgegebenen Abstand an Zellenelementen zu den x Zellenelementen angeordnet ist, folgende Schritte umfassend:
a) Empfangen zumindest eines Teils des Datenstroms;
b) Verarbeiten von x empfangenen Zellenelementen, die gemäß der Blocksicherungsanweisung relativ zueinander angeordnet sind, und eines Kandidatenzellenelements, das an der Position relativ zu den x Zellenelementen angeordnet ist, an der ein zugehöriges Sicherungszellenelement angeordnet wäre, zur Überprüfung, ob diese gemäß der Blocksicherungsanweisung zusammengehören,
c) Annahme zumindest eines Vorsynchronisierungszustands bei positiver Feststellung einer Zusammengehörigkeit in Schritt b).
**dadurch gekennzeichnet,**
**daß** die Schritte b) und c) parallel auf eine Anzahl y von Sätzen aus zumindest jeweils x Zellenelementen angewendet werden.

2. Verfahren nach Anspruch 1,
**dadurch gekennzeichnet,**
**daß** Schritt b) folgende Teilschritte umfaßt:
b1) Anwenden der vorgegebenen Blocksicherungsanweisung auf x empfangene Zellenelemente, die gemäß der Blocksicherungsanweisung relativ zueinander angeordnet sind, zum Erhalten eines Testsicherungszellenelements; und
b2) Vergleichen des Testsicherungszellenelements mit dem Kandidatenzellenelement, wobei
eine positive Zusammengehörigkeit gemäß Schritt c) festgestellt wird bei Übereinstimmung zwischen Testsicherungszellenelement und Kandidatenzellenelement.

3. Verfahren nach Anspruch 1,
**dadurch gekennzeichnet,**
**daß** Schritt b) folgende Teilschritte umfaßt:
b1) Belegung eines Schieberegisters (141 bis 145) mit fester Bitfolge, insbesondere einer Abfolge von Nullen, wobei das Schieberegister (141 bis 145) soviele Speicherplätze hat wie ein Sicherungszellenelement Bits,
b2) Anwenden der Blocksicherungsanweisung unter Verwendung des Schieberegisters (141 bis 145), wobei insbesondere eine serielle Datenabfolge umfassend die x empfangenen Zellenelemente und das Kandidatenzellenelement vor Eingabe in das Schieberegister mit einer, gegebenenfalls bearbeitenen, Ausgangsbitfolge des Schieberegisters verknüpft wird,
b3) Auslesen der Speicherplätze des Schieberegisters nach Schritt b), wobei
eine positive Zusammengehörigkeit gemäß Schritt c) festgestellt wird, wenn die aus dem Schieberegister ausgelesene Bitfolge einer bestimmtem Bitfolge, insbesondere einer Abfolge von Nullen, entspricht.

4. Verfahren nach einem der Ansprüche 1 bis 3,
**dadurch gekennzeichnet,**
**daß** die Anzahl y so gewählt wird, daß zumindest beim n-ten, insbesondere bereits beim ersten Parallelanwendungsschritt mit Sicherheit eine Zusammengehörigkeit positiv festgestellt wird.

5. Verfahren nach einem der vorhergehenden Ansprüche,
**dadurch gekennzeichnet,**
**daß** die Blocksicherungsanweisung ein Generatorpolynom (G(x)) mit oder ohne zusätzliche logische Verknüpfung enthält.

6. Verfahren nach einem der vorhergehenden Ansprüche,
**dadurch gekennzeichnet,**
**daß** die Zellen ATM-Zellen sind.

7. Verfahren nach einem der vorhergehenden Ansprüche,
**dadurch gekennzeichnet,**
**daß** die Schritte a) bis c) in Echtzeit stattfinden.

8. Verfahren nach einem der vorhergehenden Ansprüche,
**dadurch gekennzeichnet,**
**daß** jedes Zellenelement 1 Oktett lang ist und innerhalb der Anzahl y von Sätzen aus zumindest jeweils x Zellenelementen die einzelnen Sätze um 1 Oktett versetzt zueinander angeordnet sind.

9. Vorrichtung zur Durchführung des Verfahrens nach einem der vorhergehenden Ansprüche,
**dadurch gekennzeichnet,**
**daß** sie für die parallele Ausführung zumindest der Schritte b) und c) auf eine Anzahl y von Sätzen von jeweils zumindest x Zellenelementen y parallele Schaltkreise (S1 bis S5; S1' bis S5') aufweist.

10. Vorrichtung nach Anspruch 9,
**dadurch gekennzeichnet,**
**daß** nach positiver Feststellung einer Zusammengehörigkeit der Schaltkreis (S2, S2') allein bis zur Feststellung eines synchronisierten oder eines unsynchronisierten Zustands weiterbetreibbar ist, der die Zusammengehörigkeit festgestellt hat.

11. Vorrichtung nach Anspruch 10,
**dadurch gekennzeichnet,**
**daß** im nächsten Anwendungsschritt an den die Zusammengehörigkeit feststellenden Schaltkreis zumindest die Daten der Zellenelemente einer im Datenstrom nachfolgenden Zelle koppelbar sind, die den Positionen innerhalb einer Zelle entsprechen, die an ihn in dem die Zusammengehörigkeit feststellenden Schritt gekoppelt wurden.
